# EUROPÄISCHE PATENTSCHRIFT

(11) **EP 2 224 562 B1**
(45) Veröffentlichungstag und Bekanntmachung des Hinweises auf die Patenterteilung: **01.01.2014**
(21) Anmeldenummer: 10001792.0
(22) Anmeldetag: 23.02.2010
(51) Int. Cl.: H02G 3/04, E04F 19/04

(54) **Sockelleiste**
Skirting board
Plinthe

(30) Priorität: 27.02.2009 DE 102009010676
(43) Veröffentlichungstag der Anmeldung: 01.09.2010
(73) Patentinhaber: Kniaziewicz, Malgorzata, 45768 Marl-Polsum (DE)
(72) Erfinder: Kniaziewicz, Malgorzata, 45768 Marl-Polsum (DE)
(74) Vertreter: Ostriga Sonnet Wirths & Vorwerk

(56) Entgegenhaltungen:
- EP-A2- 1 447 487
- DE-A1-102008 013 971
- DE-U- 7 215 464
- DE-U1- 29 502 856
- DE-U1-202007 002 816

## Beschreibung

Die Erfindung betrifft eine Sockelleiste, mit einer Rückwand, welche der Befestigung an einer Wand dient, mit einer von der Wand beabstandeten, als Sichtfläche dienenden Vorderwand, welche schwenkbar mittels eines koextrudierten Gelenkbereichs an der Rückwand angeordnet ist, mit einem Freiraum zwischen Rückwand und Vorderwand, in dem mindestens ein Kanal zur Aufnahme von Kabeln od. dgl. angeordnet und wobei der koextrudierte Gelenkbereich betrachterseitig hinter der Vorderwand verdeckt angeordnet ist.

Derartige Sockelleisten sind aus dem Stand der Technik bekannt. Sie haben grundsätzlich den Vorteil, dass zur Verlegung von Kabeln od. dgl. im Freiraum zwischen Vorderwand und Rückwand ein Teil der Vorderwand geöffnet werden kann. Der schwenkbare Teil der Vorderwand verbleibt dabei unlösbar an der Sockelleiste.

So zeigt beispielsweise die DE 20 2007 002 816 U1 eine Sockelleiste, bei welcher ein Teilabschnitt der Vorderwand schwenkbar ausgebildet ist, so dass beim Öffnen dieses Teilabschnitts ein Hohlraum zum Verlegen von Kabeln zugänglich wird.

Die Anbindung des schwenkbaren Teilbereichs erfolgt durch einen aus weichem Kunststoff bestehenden, biegeelastischen Gelenkabschnitt, welcher stoffschlüssig in der Vorderwand angeordnet ist.

Auch die DE 72 15 464 offenbart eine Sockelleiste mit einem zwischen Vorderwand und Rückwand angeordnetem Freiraum zur Verlegung von Kabeln od. dgl., welcher durch einen schwenkbaren Teil der Vorderwand zugänglich ist. Auch hier ist ein biegeelastischer Gelenkabschnitt in die Vorderwand integriert.

Auch die DE 10 2008 013 971.8 zeigt eine Sockelleiste mit in die Vorderwand integrierten Gelenkabschnitten. Zwei koextrudierte Gelenkbereiche sind dabei so angeordnet, dass sich zwei Teilbereiche der Vorderwand gegenläufig über zwei koextrudierte Gelenkbereiche öffnen lassen.

Die EP 1 447 487 A2 offenbart ebenfalls eine Sockelleiste R, als Teil eines Profilelements, die so ausgestaltet ist, dass der Gelenkbereich verdeckt hinter der zum Boden hin aufklappbaren Vorderwand angeordnet ist.

Vorteilhafterweise ist die Vorderwand bei dem hier angeführten Stand der Technik stoffschlüssig mit der Rückwand der Sockelleiste verbunden, so dass einzelne Bauteile der Sockelleiste auch bei wiederholtem Öffnen und Schließen nicht verloren gehen können. Die drei erst-genannten, an sich vorteilhaften Sockelleisten weisen jedoch durch die Anordnung des Gelenkbereichs in der Vorderwand optische Nachteile auf. Durch die Verwendung zweier verschiedener Materialien, können für den Betrachter Unebenheiten oder farbliche Unterschiede auf der Sichtfläche der Vorderwand erkennbar werden. Bei häufigem Öffnen und Schließen der Sockelleiste, entstehen dabei möglicherweise auch Falten oder Risse im weichen Kunststoff, in dem sich unvorteilhafterweise Schmutz sammeln kann, was unter hygienischen Gesichtspunkten problematisch sein kann.

Auch bei der in der EP 1 447 487 A2 offenbarten Sockelleiste, bei der der Gelenkbereich bereits hinter eine Dichtlippe und damit hinter der Vorderwand verdeckt angeordnet ist, sind hygienische Nachteile zu verzeichnen. Bei häufigem Öffnen und Schließen der Sockelleiste entstehen in der unteren Dichtlippe möglicherweise Falten und Risse, in der sich Schutz sammelt. Zudem ist es möglich, dass durch die Anordnung des Gelenkbereichs in unmittelbarer Bodennähe die Dichtlippe sich beim Öffnen unter der Sockelleiste verklemmt und dadurch Schaden nimmt oder abreißt. Dies ist optischen und hygienischen Gesichtspunkten von großem Nachteil.

Ausgehend von dem letztgenannten Stand der Technik ist es nunmehr Aufgabe der Erfindung, eine neue Sockelleiste bereitzustellen, die höheren hygienischen Anforderungen entspricht.

Die Lösung der Aufgabe ergibt sich aus den Merkmalen des Anspruches 1, insbesondere den Merkmalen des Kennzeichenteils, wonach der koextrudierte Gelenkbereich aus Weichkunststoff gefertigt und an der bodenfernen Seite der Sockelleiste angeordnet ist.

Die erfindungsgemäße Lösung hat zunächst einmal den Vorteil, dass die Vorderwand aus einem Material gefertigt wird, so dass die Sichtfläche der Sockelleiste auch bei häufigem Öffnen und Schließen dauerhaft optisch vorteilhaft gestaltet ist. Die durchgehende und glatte Sichtfläche erfüllt zudem die höheren hygienischen Ansprüche an die Sockelleiste. Dadurch, dass der koextrudierte Gelenkbereich bodenfern angeordnet ist, genügt die Leiste höchsten hygienischen Anforderungen, zudem lässt sich auf diese Weise weiterhin die gesamte Vorderwand aufklappen und der Benutzer erhält weiterhin bequem Zugang zu den einzelnen Kabelkanälen, so dass auch eine Vielzahl von Kabeln problemlos verlegt werden kann.

Des Weiteren muss der im Gelenkbereich verwendete Kunststoff hinsichtlich seiner Oberflächeneigenschaften und seiner Farbe nicht mehr an die Sichtfläche der Sockelleistenvorderwand angepasst werden, er muss ausschließlich seine Gelenkfunktion erfüllen, so dass hier Vorteile hinsichtlich des Produktionsablaufes und der Herstellungskosten zu sehen sind.

Bei einer Ausführungsform der Erfindung ist die Rückseite der Vorderwand mittels Klemm- bzw. Rastmitteln an der Sockelleiste lösbar befestigbar. Diese Klemm- bzw. Rastmittel bestehen aus Klemm- bzw. Rastelementen einerseits und Klemm- bzw. Rastaufnahmen andererseits. Beide Teile können auf der fortlaufenden Sockelleiste punktförmig angebracht sein, bevorzugterweise sind sie jedoch linienhaft ausgebildet, was produktionstechnische Vorteile im Extrusionsverfahren hat. Wiederholte Öffnungs- und Schließvorgänge können damit an der Sockelleiste problemlos durchgeführt werden, ohne dass die Verschlusssicherheit leidet.

Bei einer weiteren Ausführungsform der Erfindung ist der obere und untere Randbereich der Vorderwand jeweils aus weichem Kunststoff koextrudiert und damit als flexible Dichtlippe ausgebildet. Vorteilhafterweise schmiegen sich die Randbereiche dadurch an die Wand bzw. den Bodenbelag an, auch wenn diese uneben sind. Durch diese vorteilhafte Ausgestaltung der Randbereiche der Vorderwand, ist der Innenraum der Sockelleiste vor dem Eindringen von Fremdkörpern, wie beispielsweise Staub, geschützt.

Bei einer besonderen Ausführungsform sind diese Bereiche aus weichem Polyvinylchlorid (PVC) gebildet. Durch den Zusatz handelsüblicher Weichmacher, kann die Weichheit des PVC optimal eingestellt werden. Der Kunststoff weist dann die gewünschte Biegsamkeit und Anpassungsfähigkeit auf.

Bei einer weiteren besonderen Ausführungsform sind die übrigen Bereiche aus hartem Kunststoff, wie beispielsweise Acrylnitril-Butadien-Styrol-Polymerisat, gebildet. ABS-Polymerisate weisen die gewünschten Materialeigenschaften, wie hohe Schlag- und Kerbschlagzähigkeit, Kratz- und Härtezähigkeit sowie eine hohe Formbeständigkeit auf.

Bei einer besonders bevorzugten Ausführungsform werden im Freiraum zwischen Rückwand und Vorderwand mehrere Kanäle durch mindestens eine Trennwand ausgebildet. Die Trennwand kann im freien Endbereich Rast- oder Klemmelemente oder Aufnahmen für Rast- oder Klemmelemente aufweisen. In den einzelnen Kanälen können vorteilhafterweise verschiedenartige Kabel, beispielsweise funktionsgebunden, verlegt werden.

Weitere Vorteile der Erfindung ergeben sich aus der Beschreibung des Ausführungsbeispiels. Es zeigt:
- Fig. 1: eine Schnittdarstellung einer erfindungsgemäßen Sockelleiste mit einem bodenfern angeordneten Gelenkbereich. Die Figuren 2 und 3 zeigen nicht die Erfindung sondern dienen lediglich als Beispiele.
- Fig. 2: zeigt eine Schnittdarstellung einer Sockelleiste mit einem bodennah angeordneten Gelenkbereich; und
- Fig. 3: eine Schnittdarstellung einer Sockelleiste gemäß Fig. 2 in geöffnetem Zustand.

In den Figuren ist eine Sockelleiste insgesamt mit der Bezugsziffer 10 bezeichnet.

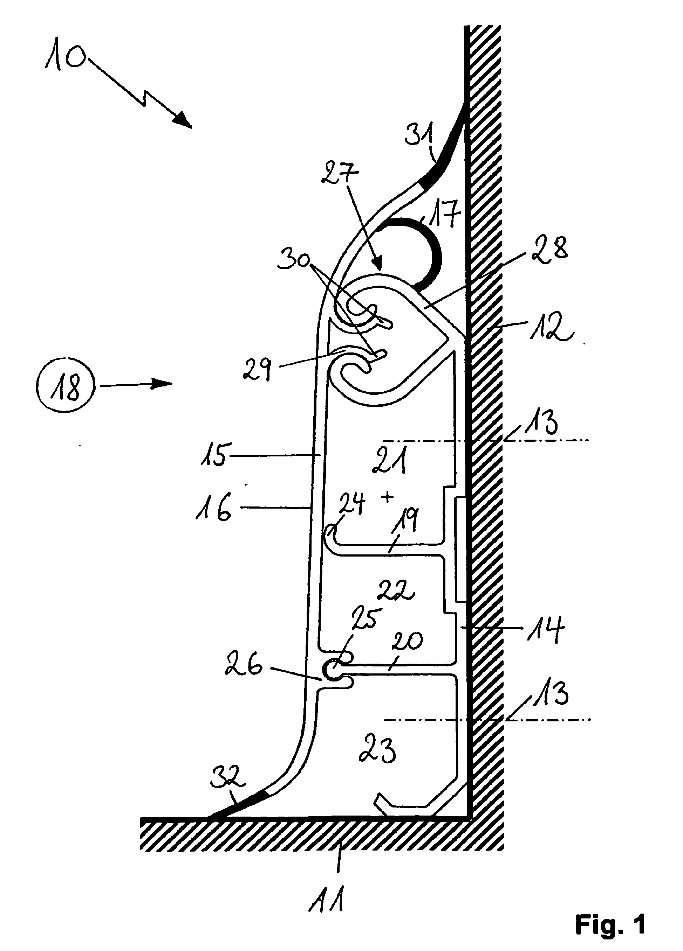

Die Sockelleiste 10 ist, wie in Fig. 1 dargestellt, in einem Übergangsbereich zwischen einem Boden 11 und einer Wand 12, beispielsweise durch Klebung oder durch Befestigungsschrauben 13, an der Wand 12 angeordnet.

Die Sockelleiste 10 weist eine Rückwand 14 und eine Vorderwand 15 auf. Die Vorderwand 15 ist mit einer einheitlichen Sichtfläche 16 ausgestattet, welche durchgehend aus einem Kunststoffmaterial besteht, so dass sie auch hohen optischen und hygienischen Anforderungen entspricht.

Ein aus weichem Kunststoff koextrudierter Gelenkbereich 17 verbindet die Vorderwand 15 mit der Rückwand 14, so dass die Sockelleiste 10 als zusammenhängendes Bauteil extrudierbar ist. Der Gelenkbereich 17 ist erfindungsgemäß so angeordnet, dass er für einen Betrachter 18 nicht sichtbar hinter der Vorderwand 15 befestigt ist.

Um den notwendigen Spielraum für die Offnungs- bzw. Schließbewegung der Sockelleiste 10 zu gewährleisten, muss der Gelenkbereich 17 hinsichtlich seiner Länge bzw. Dehnbarkeit ausreichend Spielraum aufweisen. Beispielsweise kann er, wie aus den Figuren ersichtlich, halbkreisförmig geformt sein.

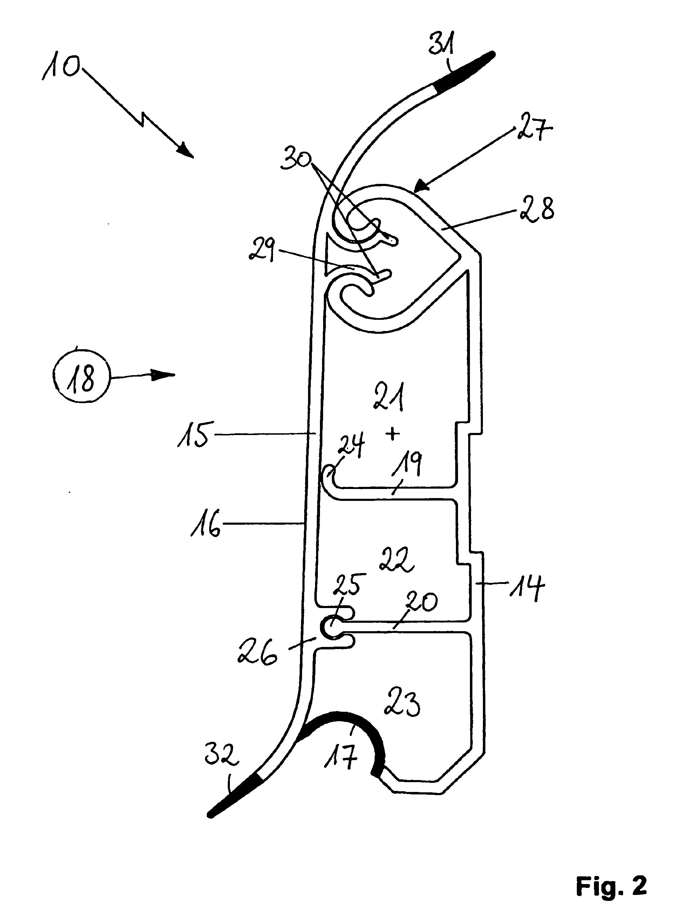

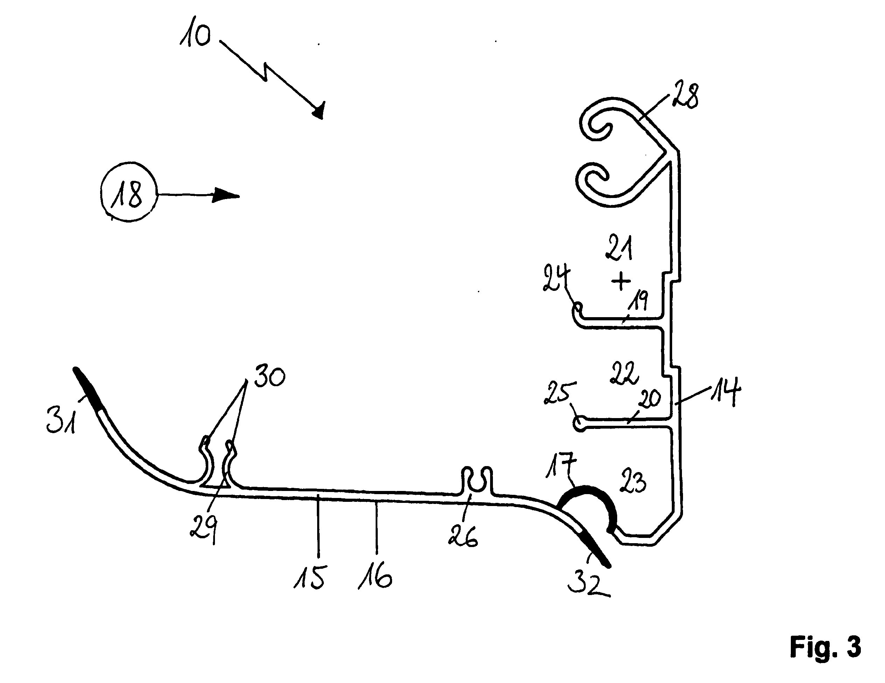

Während in Fig. 1 der Gelenkbereich 17 erfindungsgemäß bodenfern angeordnet ist, zeigen Fig. 2 und 3 Sockelleisten mit einem bodennah angeordneten Gelenkbereich 17. Bei beiden Ausführungsbeispielen klappt die gesamte Vorderwand 15 auf, so dass der Benutzer bequem Zugang zu den Kabelkanälen 21, 22, 23 erhält.

Wie aus den Figuren ersichtlich, weist der Freiraum zwischen Rückwand 14 und Vorderwand 15 zwei Trennwände 19, 20 auf, wodurch drei Kanäle 21, 22, 23 gebildet werden. Die Trennwände 19, 20 sind stoffschlüssig mit der Rückwand 14 verbunden.

Die Trennwand 19 weist in ihrem freien Endbereich eine parallel zur Vorderwand ausgerichtete Anlagefläche 24 auf, die beim Schließen der Sockelleiste 10 großflächig an der Vorderwand 15 anliegt. Damit wird ein sicher von den anderen Kanälen abgetrennter Bereich geschaffen. Zudem werden negative Auswirkungen auf die Sichtfläche 16, beispielsweise durch Ausbeulen der Vorderwand 15, vermieden.

Die Trennwand 20 weist, wie in den Figuren dargestellt, in ihrem freien Endbereich ein endseitig verdicktes Rastelement 25 auf, welches beim Schließen der Sockelleiste 10 in die an der Vorderwand 15 in entsprechender Höhe angeordnete, aus zwei endseitig verdickten Schenkeln bestehende Rastaufnahme 26 einfedert.

Ein weiteres Rastmittel 27 ist im bodenfernen Bereich der Sockelleiste 10 angeordnet. Dabei gehen aus einem gemeinsamen Ursprungspunkt an der Rückwand 14 zwei klammerartige zueinander gebogene, federnde Schenkel hervor, die zusammen in offener Herzform ein Rastelement 28 bilden. An der Vorderwand ist in der entsprechenden Position eine Rastaufnahme 29 angeordnet, welche aus zwei beabstandeten, federnden Schenkeln besteht, welche nach außen gebogen sind und an ihren freien Endbereichen Anlaufschrägen 30 aufweisen. Beim Schließen der Sockelleiste 10 liegen die gebogenen Endbereiche des Rastelements 28 an den Anlaufschrägen 30 an und drücken die beiden federnden Schenkel der Rastaufnahme 29 mit manueller Schließkraft zusammen. Sobald das Rastelement 28 die Todpunktstellung überwunden hat, rastet es in die Rastaufnahme 29 ein. Vorteilhafterweise bildet dieses Rastmittel 27 eine Verschlussvorrichtung mit großer Haltekraft. Zudem ist der Öffnungsvorgang bei dieser Verschlussvorrichtung gleitend und damit materialschonend.

Die Vorderwand 15 der Sockelleiste 10 weist im oberen und unteren Randbereich flexible Dichtlippen 31, 32 auf. Diese werden aus weichem Kunststoff koextrudiert. Sie schmiegen sich an die Wand 12 bzw. den Boden 11 an, so dass ein lückenloser Übergang zwischen Sockelleiste 10 und Wand 12 bzw. Boden 11 entsteht. Durch die Verwendung von weichem PVC in einer bevorzugten Ausführungsform der Erfindung, passt sich der Kunststoff optimal an den Untergrund (Wand oder Boden) an. Zudem ist eine sehr gute Beständigkeit gegenüber Säuren und Laugen, wie beispielsweise in Reinigungsmitteln enthalten, gegeben.

## Patentansprüche

1. Sockelleiste (10), mit einer Rückwand (14), welche der Befestigung an einer Wand (12) dient, mit einer von der Wand (12) beabstandeten, als Sichtfläche dienenden Vorderwand (15), welche schwenkbar mittels eines koextrudierten Gelenkbereichs (17) an der Rückwand (14) angeordnet ist und mit einem Freiraum zwischen Rückwand (14) und Vorderwand (15), in dem mindestens ein Kanal (21, 22, 23) zur Aufnahme von Kabeln od. dgl. angeordnet ist, wobei der koextrudierte Gelenkbereich (17) betrachterseitig hinter der Vorderwand (15) verdeckt angeordnet ist, **dadurch gekennzeichnet, dass** der koextrudierte Gelenkbereich (17) aus Weichkunststoff gefertigt und an der bodenfernen Seite der Sockelleiste (10) angeordnet ist.

2. Vorrichtung nach Anspruch 1, **dadurch gekennzeichnet, dass** die Vorderwand (15) mit Klemm- bzw. Rastmitteln (25, 26) an der Sockelleiste (10) lösbar befestigbar ist.

3. Vorrichtung nach einem der vorangehenden Ansprüche, **dadurch gekennzeichnet, dass** der obere und untere Randbereich der Vorderwand (15) jeweils als flexible Dichtlippe (31, 32) ausgebildet ist.

4. Vorrichtung nach einem der vorangehenden Ansprüche, **dadurch gekennzeichnet, dass** der koextrudierte Gelenkbereich (17) und die Randbereiche der Vorderwand (31, 32) aus weichem Polyvinylchlorid (PVC) gebildet ist.

5. Vorrichtung nach einem der vorangehenden Ansprüche, **dadurch gekennzeichnet, dass** die Sockelleiste, mit Ausnahme des koextrudierten Gelenkbereichs (17) und der Randbereiche der Vorderwand (31, 32), aus Acrylnitril-Butadien-Styrol-Polymerisat gebildet ist.

6. Vorrichtung nach einem der vorangehenden Ansprüche, **dadurch gekennzeichnet, dass** im Freiraum zwischen Rückwand (14) und Vorderwand (15) mehrere Kanäle durch mindestens eine Trennwand (19, 20) ausgebildet sind.

## Claims

1. Skirting board (10) having a rear wall (14) which serves for fastening to a wall (12), having a front wall (15) which is spaced apart from said wall (12), serves as a visible face and is arranged so as to be pivotable, by means of a co-extruded joint region (17), on the rear wall (14), and having a free space between the rear wall (14) and the front wall (15) in which at least one conduit (21, 22, 23) for receiving cables or the like is arranged, wherein the co-extruded joint region (17) is arranged so as to be concealed, from the observer's side, behind the front wall (15),
**characterised in that** the co-extruded joint region (17) is produced from soft plastic and is arranged on that side of the skirting board (10) which is remote from the floor.

2. Device according to Claim 1, **characterised in that** the front wall (15) can be fastened to the skirting board (10) in a detachable manner with the aid of gripping or latching means (25, 26).

3. Device according to one of the preceding claims, **characterised in that** the upper and lower edge regions of the front wall (15) are each constructed as a flexible sealing lip (31, 32).

4. Device according to one of the preceding claims, **characterised in that** the co-extruded joint region (17) and the edge regions of the front wall (31, 32) are formed from soft polyvinyl chloride (PVC).

5. Device according to one of the preceding claims, **characterised in that** the skirting board, with the exception of the co-extruded joint region (17) and the edge regions of the front wall (31, 32), is formed from acrylonitrile-butadiene-styrene copolymer.

6. Device according to one of the preceding claims, **characterised in that** a number of conduits are constructed in the free space between the rear wall (14) and the front wall (15) by at least one partition (19, 20).

## Revendications

1. Plinthe (10) avec une paroi arrière (14), laquelle sert à la fixation au niveau d'une paroi (12), avec une paroi avant (15) servant en tant que partie visible, espacée de la paroi (12), laquelle est disposée orientable au moyen d'une zone d'articulation (17) co-extrudée au niveau de la paroi arrière (14) et avec un espace libre entre la paroi arrière (14) et la paroi avant (15), dans lequel est disposé au moins un canal (21, 22, 23) pour loger des câbles ou similaires, la zone d'articulation (17) co-extrudée étant disposée couverte, côté observateur, derrière la paroi avant (15), **caractérisée en ce que** la zone d'articulation (17) co-extrudée, fabriquée en matière plastique souple, est disposée au niveau du côté, éloigné du sol, de la plinthe (10).

2. Dispositif selon la revendication 1, **caractérisé en ce que** la paroi avant (15) peut être fixée de façon amovible à l'aide de moyens de serrage ou d'enclenchement (25, 26) au niveau de la plinthe (10).

3. Dispositif selon l'une des précédentes revendications, **caractérisé en ce que** les zones de bord supérieure et inférieure de la paroi avant (15) sont respectivement conçues en tant que lèvre d'étanchéité (31, 32) flexible.

4. Dispositif selon l'une des précédentes revendications, **caractérisé en ce que** la zone d'articulation (17) co-extrudée et les zones de bord de la paroi avant (31, 32) sont formées en chlorure de polyvinyle (PVC) souple.

5. Dispositif selon l'une des précédentes revendications, **caractérisé en ce que** la plinthe, à l'exception de la zone d'articulation (17) co-extrudée et des zones de bord de la paroi avant (31, 32), est formée en polymérisat acrylonitrile-butadiène-styrène.

6. Dispositif selon l'une des précédentes revendications, **caractérisé en ce que**, dans l'espace libre entre la paroi arrière (14) et la paroi avant (15), plusieurs canaux sont réalisés par au moins une paroi de séparation (19, 20).
